# EUROPEAN PATENT APPLICATION

(11) **EP 2 495 882 A1**
(43) Date of publication of application: **05.09.2012**
(21) Application number: 11290106.1
(22) Date of filing: 28.02.2011
(51) Int. Cl.: H04B 5/00, H01Q 13/20, H04B 7/10, H04W 88/08

(54) **Distributed antenna system**

(71) Applicant: Alcatel Lucent, 75007 Paris (FR)
(72) Inventor: Hettstedt, Heinz-Dieter, 30916 Ilsemhagen (DE); Harutyunyan, Gurgen, 30916 Ilsemhagen (DE); Schomburg, Ekkehard, 30938 Burgwedel (DE)
(74) Representative: Dreiss

(57) **Abstract**

The present invention relates to a distributed antenna system (2) for exchanging radio frequency, RF, signals between at least one user equipment and at least one transceiver unit (6, 8) coupled to said antenna system (2). Said antenna system (2) comprises at least a first and a second radiating cable (10, 12). Each of said radiating cables (10, 12) forms a part of a respective RF transmission channel between said transceiver unit (6, 8) and the user equipment (22a) and can be operated independently of further radiating cables.

## Description

### Field of the invention

The invention relates to a distributed antenna system for transmitting and receiving RF signals from and to at least one user equipment.

### Background

Different communication standards such as LTE, WiFi or HSPA+ propose a multiple-input-multiple-output (MIMO) transmission scheme to improve data throughput from the backhaul network to the user equipment and backwards.

For a MIMO transmission scheme a sender unit and a receiver unit comprises at least two antennas, respectively, whereby a plurality of independent radio channels may be established between the devices. The sender unit and the receiver unit comprise signal processing means to make use of said different RF transmission channels.

It is further known to provide an isotropic antenna fixed to one point inside an elongated building structure such as a railway tunnel for providing radio coverage within the tunnel. This configuration has several drawbacks due to decreased coverage when moving away from the antenna.

It is an object of the present invention to provide an improved distributed antenna system which enables the use of a MIMO transmission scheme for the transmission and/or reception of RF signals, particularly within building structures and other confined spaces impeding RF wave propagation.

### Summary

This object is achieved by a distributed antenna system according to claim 1.

The invention enables MIMO communication inside an elongated building structure, in particular inside a railway or road tunnel. Thus, a particularly efficient communication between the user equipment and a transceiver over the distributed antenna system may be accomplished, because the inventive distributed antenna system can advantageously support multiple simultaneous communication paths to establish RF transmission channels allowing data rates even above the theoretical Shannon limit. Thus, applications such as mobile tv inside a tunnel environment are feasible for high-density passenger trains, such as Metro trains.

According to a further embodiment, the radiating cables are configured to radiate and/or receive RF signals with a first and second polarization, respectively. The first polarization is different from the second polarization. Advantageously the different polarizations provide a parameter to identify/distinguish between the different RF transmission channels by said user equipment and by the antenna system itself. I.e., a first MIMO channel may be realized with signals being radiated from a first radiating cable with a first polarization, whereas a second MIMO channel may be realized with signals being radiated from a second radiating cable with a second polarization.

According to a further embodiment, the at least first and second radiating cables run substantially into the same direction and/or are at least in sections aligned parallel to each other. Advantageously these configurations allow a continuously substantially equal coverage along the elongated building structure. Furthermore, the radiation power level can be reduced for user equipments moving along the at least two radiating cables if a smooth RF signal field strength distribution along the radiating cables is provided. Further, due to different positions of radiating openings within said cables, the RF transmission properties of different RF channels enabled by the cables can be tuned, e.g. to achieve different delay characteristics.

According to a further embodiment, the first polarization is substantially orthogonal to the second polarization. Therefore, the at least first and second radiating cables are configured to emit and receive RF signals independently of each other. This feature, in addition to the usage of more than one radiating cable, provides a further parameter to create and identify different RF transmission channels supported by the antenna system.

According to a further embodiment, the at least first and second radiating cables are lengthwise arranged adjacent to each other.

According to an embodiment, a radiating cable is preferably a coaxial cable comprising an electrically conductive shield, preferably a copper shield, with slots that enable RF radiation to be irradiated from the cable to free space. The radiating cable furthermore can feature a (nonconducting) cable coating around the shield.

According to the adjacent arrangement of the first and second radiating cables, the distance between the radiating cables can be substantially constant along the radiating cables and can be equal to or greater than e.g. a diameter of a radiating cable. According to a further embodiment, an adjacent arrangement of the first and second radiating cables may also comprise an arrangement of the radiating cables with direct contact of the respective cable coatings. Advantageously, the adjacent arrangement allows an easy installation of the distributed antenna system while still providing the multichannel capability to implement a MIMO transmission scheme. E.g., the adjacent arrangement of radiating cables may be mounted to a building wall by means of standoffs, which define a predetermined spacing between the wall and the cables.

According to a further embodiment, the at least first and second radiating cables are arranged on a first side wall inside the elongated building structure, in particular on a height above the floor corresponding to a region of the window of a passing vehicle, in particular a train or a car. Advantageously, the first and second radiating cables provide a coverage in the area of a window of a passing vehicle, especially a train, and therefore in the area of a user equipment. So the distance between the radiating cables and the user equipment is reduced and persons are less exposed to electromagnetic radiation.

In a further embodiment, the at least first and second radiating cables are arranged on a ceiling inside the elongated building structure. This configuration provides coverage in a cross section of the elongated building structure which is especially adapted for a user equipment with antennas on the top of the passing vehicle.

In a further embodiment, the first radiating cable is arranged to a first side wall inside the elongated building structure and the second radiating cable is arranged to a second side wall opposite to the first side wall. Both the first and the second radiating cables are in particular arranged on a height above the floor corresponding to a region of a window of a passing vehicle. Advantageously, this configuration provides coverage from both sides of the elongated building structure, in particular of the tunnel, and therefore the configuration provides reliability of the communication between the two radiating cables and the user equipment. For example, one broken radiating cable does not lead to a complete collapse of the communication, as the other radiating cable can still be operated.

In a further embodiment the first radiating cable, in particular an electrically conductive shield of the first radiating cable, comprises first slots along a longitudinal axis of the elongated building structure. Each of the first slots is aligned substantially perpendicular to a longitudinal axis of the first radiating cable or further radiating cables. Therefore, the first radiating cable running along a horizontal direction can emit RF signals with a horizontal polarization.

According to a further embodiment, the second radiating cable, in particular an electrically conductive shield of the second radiating cable, comprises second slots. The longitudinal axis of the second slots is aligned substantially transversely to a longitudinal direction of the second radiating cable. The second radiating cable running along a horizontal direction therefore can radiate and/or receive RF signals with a different polarization as the RF signals radiated and/or received by the first radiating cable.

A transverse orientation of slots within a radiating cable is also possible. It is further possible to provide one specific radiating cable with different types of slots. Of course, more than two radiating cables may also be provided to form a distributed antenna system according to an embodiment.

### Brief description of the figures

Further aspects, features and embodiments of the present invention are given in the following detailed description with reference to the drawings, in which:
- Figure 1: schematically depicts a block diagram of a distributed antenna system,
- Figure 2: schematically depicts different embodiments of an arrangement of a first and a second radiating cable inside a tunnel,

- Figure 3a: schematically depicts a copper shield of the first radiating cable in a side view, and
- Figure 3b: schematically depicts a copper shield of the second radiating cable in a side view.

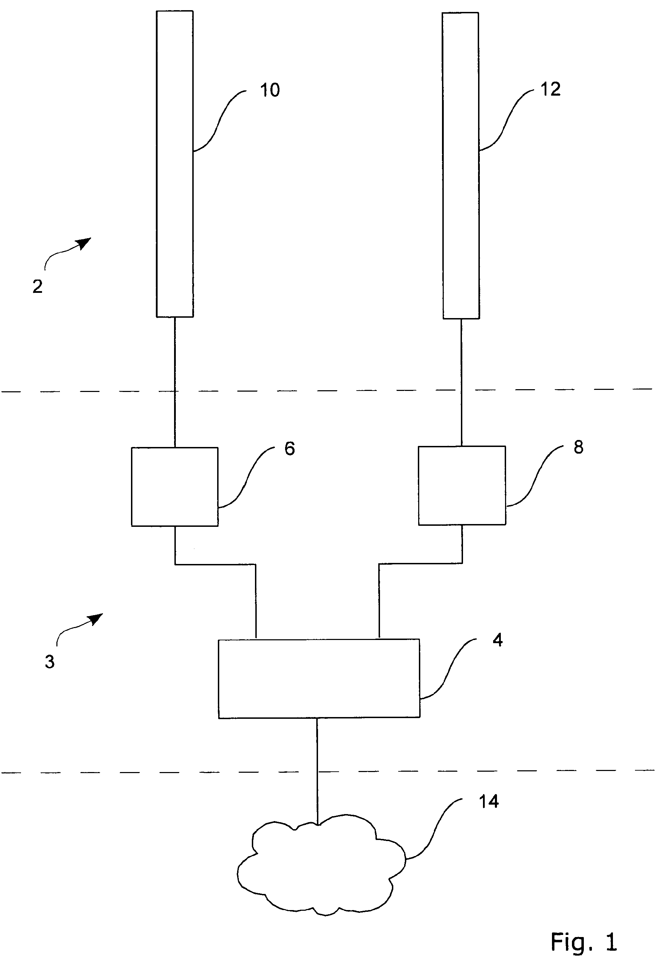

Figure 1 schematically depicts a block diagram of a distributed antenna system 2 according to an embodiment.

The distributed antenna system 2 comprises a first radiating cable 10 and a second radiating cable 12. A communication system 3 comprises the distributed antenna system 2, a host unit 4 and a first and a second transceiver unit 6 and 8. The host unit 4 is e.g. connected to a backhaul network 14.

The distributed antenna system 2 is configured to receive downlink data from the backhaul network 14 via the host unit 4, to create according RF (radio frequency) downlink signals and to transmit the RF downlink signals from the first and the second radiating cables 10 and 12 to at least one user equipment (not shown) using preferably a MIMO transmission scheme. Therefore, the distributed antenna system 2 is configured to exchange RF signals between the at least one user equipment and at least one transceiver unit 6 or 8 coupled to said antenna system 2. Each of said radiating cables 10 or 12 forms a part of a respective RF transmission channel between said transceiver unit 6 or 8 and the user equipment. Each of the radiating cables 10 and 12 can preferably be operated independently and therefore can transmit and/or receive a distinctive/different RF signal.

RF signals generated and/or forwarded by the transceiver units 6 or 8 to the cables 10, 12 are transmitted via the cables 10, 12 in a per se known manner and may be radiated from the cables 10, 12 to free space via openings in a cable shield (not shown). Thus, an RF signal channel between the transceivers 6, 8 and a user equipment comprises a portion of cable-guided RF transmission and a further portion of free space RF transmission, namely after said RF signal portions leave the radiating cables 8, 10.

The user equipment comprises preferably at least two antennas to receive and/or transmit the different RF signals emitted by the cables 10, 12. For instance, the different RF signals emitted by the cables 10, 12 may each comprise a specific polarization.

According to an embodiment, the distributed antenna system 2 is configured to receive RF uplink signals from the user equipment by means of the first and the second radiating cables 10 and 12, again using preferably a MIMO transmission scheme, to generate according uplink data via the transceiver units 6 and 8 and the host unit 4 and to transmit the respective uplink data to the backhaul network 14.

The host unit 4 is configured to coordinate the generation and reception of the RF signals in the transceiver units 6 and 8. The first and the second radiating cables 10 and 12 are arranged in different locations and/or emit and receive RF signals featuring different polarizations for example. The host unit 4 and/or the user equipment may comprise processing means e.g. for analysing and combining received RF signals in order to provide for spatial diversity, to apply interference cancellation, and the like.

Advantageously, the host unit 4 establishes different RF transmission channels in parallel (i.e., simultaneously) using the same RF spectrum for spatial multiplexing, i.e. by employing different polarizations.

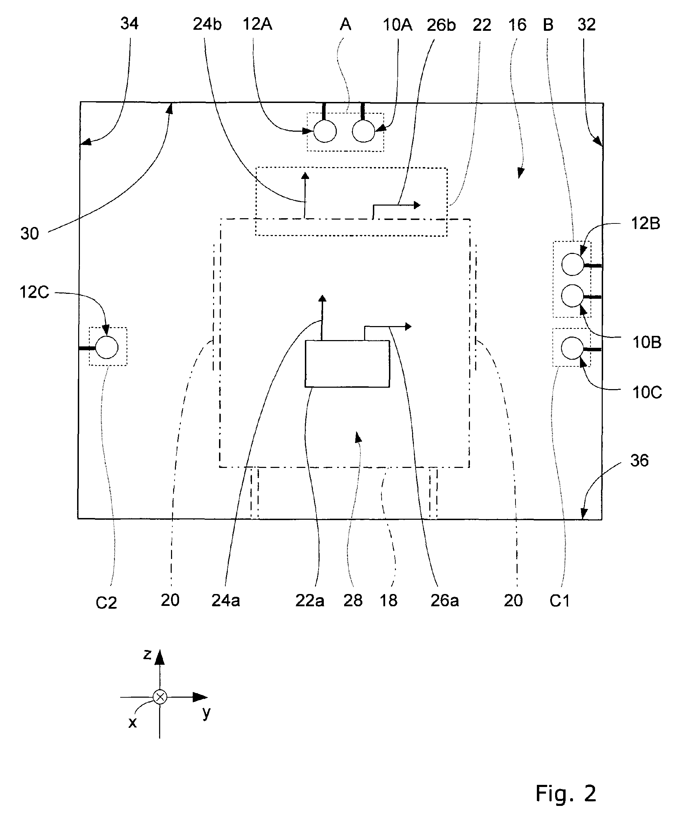

Figure 2 schematically depicts different embodiments of an arrangement of the at least first and the second radiating cable 10 and 12 inside a railway tunnel 16 in a cross section. Of course the depicted scenario is not restricted to railway tunnels and is also applicable to other types of tunnels for example street tunnels, elongated building structures or along guided routes outside buildings. A further application is possible in train coaches, cars, airplanes or other vehicles with closed cages.

In a further embodiment, the at least first and second radiating cables 10 and 12 extend outside the vehicle along an elongated building structure such as the tunnel, wherein an external user equipment fixed on the outside the vehicle communicates with the at least first and second radiating cables 10 and 12 by means of RF signals, preferably using a MIMO transmission scheme. Inside the vehicle are arranged further first and second radiating cables 10 and 12 to communicate with an inside user equipment like a cell phone by means of RF signals, preferably using a MIMO transmission scheme.

Inside the railway tunnel 16 according to Fig. 2, it is shown a cross-section of a train 18. Side windows 20 of the train 18 are arranged on each side of the train 18. The side windows 20 are preferably made of material without or with few electromagnetic screening capability, preferably glass which does not prevent RF signals to pass from one side to the other.

A first user equipment 22a comprises a first antenna 24a to receive and transmit preferably horizontally polarized RF signals and a second antenna 26a to receive and transmit preferably vertically polarized RF signals. The longitudinal axis of the first antenna 24a is arranged substantially perpendicular to the longitudinal axis of the second antenna 26a. The user equipment 22a is preferably a cell phone which can reside at different positions of a passenger area 28 inside the train 18. The user equipment 22a is exemplarily expected to be positioned by the user on the same level in z-direction as the side windows 20.

A second user equipment 22b comprises a first antenna 24b and a second antenna 26b. The user equipment 22a is preferably a train radio service. The antennas 24b and 26b are arranged on the top of the train 18. The longitudinal axis of the first antenna 24b and the longitudinal axis of the second antenna 26b are arranged perpendicular to each other.

According to an embodiment of the distributed antenna system 2, the at least first and second radiating cables 10A and 12A are arranged on a ceiling 30 of the railway tunnel 16 at a first position A. As shown, the radiating cables 10A and 12A are mounted to the ceiling 30 preferably with a distance to the ceiling 30 by means of a distance element or stand-off, respectively.

According to a further embodiment of the distributed antenna system 2, radiating cables 10B and 12B are arranged on a first side wall 32 of the railway tunnel 16 at a second position B. According to the positions A and B, the at least first and second radiating cables 10A and 12A, 10B and 12B are lengthwise arranged adjacent to each other with a distance between each other. The distance between radiating cables can range from about zero up to several meters, usually depending on wavelength of the employed RF signals.

In particular, the first and the second radiating cables 10B and 12B are arranged on a height above a floor 36 of the railway tunnel 16. According to a preferred embodiment, the radiating cables 10B and 12B run along an x-direction and on a level in z-direction above the floor 36 corresponding to the level of the windows 20 of the train 18.

In yet another embodiment, a first radiating cable 10C is attached to the first side wall 32 according to a position C1 and a second radiating cable 12C is attached to a second side wall 34 according to a position C2. The positions C1 and C2 are arranged on a height above the floor 36 inside two planes parallel to the xy-plane and limited in z-direction by the top and bottom edge of one of the windows 20.

According to the positions A and B, the radiating cables 10A and 12A, 10B and 12B are arranged adjacent to each other and are in a preferred embodiment covered by a shared cable coating forming a ribbon cable which facilitates installation of the antenna system.

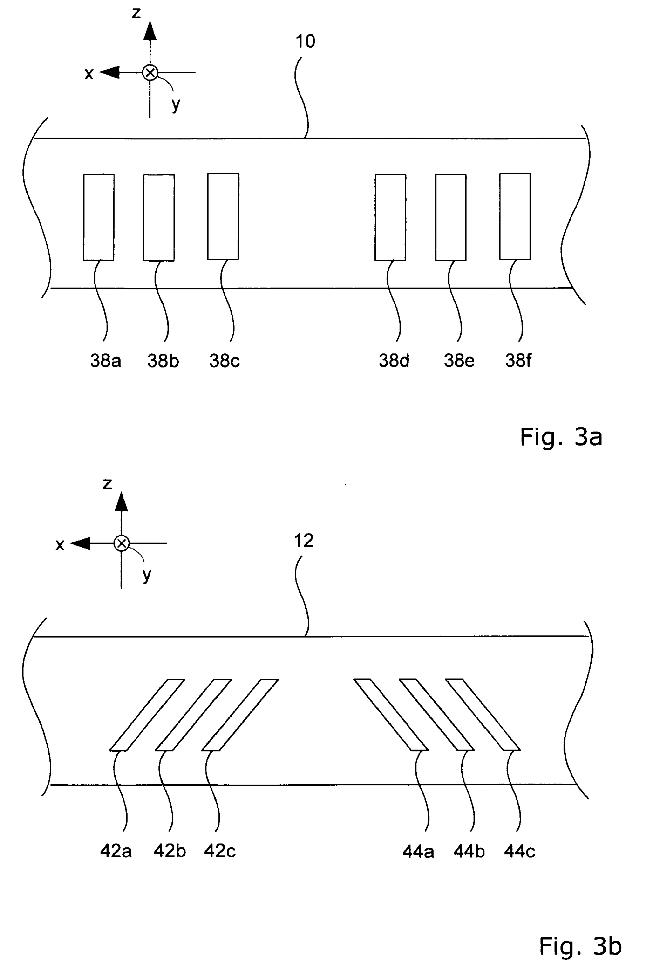

Figure 3a schematically depicts a copper shield of the first radiating cable 10 in a side view. The copper shield of the first radiating cable 10 features first slots 38. A longitudinal axis of each of the first slots 38 along the z-direction is aligned perpendicular to a longitudinal axis of the first radiating cable 10 along the x-direction. The first slots 38 are arranged in first groups 38a, 38b, 38c and 38d, 38e, 38f along the longitudinal axis of the first radiating cable 10. For example, the first radiating cable 10 is configured to transmit and receive RF signals featuring a first polarization, wherein the first polarization is a horizontal polarization assuming that the first radiating cable 10 extends in a horizontal direction.

Figure 3b schematically depicts a copper shield of the second radiating cable 12 in a side view. The copper shield of the second radiating cable 12 comprises second slots 42a, 42b, 42c and third slots 44a, 44b, 44c. A longitudinal axis of each of the second slots and the third slots is aligned parallel to xz-plane (i.e., transverse to the longitudinal axis of the cable 12).

The second radiating cable 12 thus emits and receives RF signals featuring a second polarization, which is different from the first polarization realized by the first radiating cable 10 (Fig. 3a). Preferably, the second polarization is a vertical polarization assuming that the second radiating cable 12 also extends in a horizontal direction.

The RF signals emitted by the first and second radiating cables 10 and 12 thus comprise different polarizations which enables different independent RF channels to be achieved that support a MIMO transmission scheme between the terminals 22a, 22b and the transceivers 6, 8.

Preferably, the first and second radiating cables 10 and 12 are configured for broad-band signal transmission, whereby multiple RF bands can simultaneously be transmitted over a single radiating cable 10 or 12.

Of course, the inventive distributed antenna system 2 is not restricted to two radiating cables 10, 12; it can also comprise more than two radiating cables.

According to another embodiment, the first radiating cable 10 can be used only for the transmission of RF signals and the second radiating cable 10 can be used only for the reception of RF signals.

A further aspect of the present invention is given by a method to operate the distributed antenna system 2, wherein a first RF band, preferably adjacent to a second RF band, is transmitted via the first radiating cable 10 to terminals, and wherein at least the second RF band is received via the second radiating cable 12, too.

Generally, the at least two radiating cables 10 and 12 advantageously establish at least two independent RF transmission channels which may e.g. be employed to enable MIMO transmission schemes. Due to the combination of a distributed antenna concept using the radiating cables and the at least two independent RF transmission channels enabled by said at least two radiating cables, MIMO schemes may ideally be supported even in tunnels and other structures impeding signal propagation of RF signals having nonvanishing bandwidths.

According to a further embodiment, a pair of first and second radiating cables 10 and 12 is used to provide cross-polarization, especially horizontal and vertical, for suppressing cross-coupling between two RF transmission channels for a 2x2 MIMO system, meaning two antennas on transmitter side to emit and two antennas on receiver side to receive, or to provide the ability of diversity.

## Claims

1. Distributed antenna system (2) for exchanging radio frequency, RF, signals between at least one user equipment (22a) and at least one transceiver unit (6, 8) coupled to said antenna system (2), said antenna system (2) comprising at least a first and a second radiating cable (10, 12), wherein each of said radiating cables (10, 12) forms a part of a respective RF transmission channel between said transceiver unit (6, 8) and the user equipment (22a) and can be operated independently of further radiating cables.

2. Distributed antenna system (2) according to claim 1,
wherein the radiating cables (10, 12) are configured to radiate and/or receive RF signals with a first and second polarization, respectively, and wherein the first polarization is different from the second polarization.

3. Distributed antenna system (2) according to claim 1 or 2, wherein at least two of said radiating cables (10, 12) are at least in sections arranged substantially in parallel to each other.

4. Distributed antenna system (2) according to claim 2 or 3, wherein the first polarization is substantially orthogonal to the second polarization.

5. Distributed antenna system (2) according to one of the foregoing claims, wherein the at least first and second radiating cables (10, 12) are lengthwise arranged adjacent to each other.

6. Distributed antenna system (2) according to claim 5,
wherein the at least first and second radiating cables (10, 12) are arranged on a first side wall (32) inside an elongated building structure, in particular on a height above a floor (36) corresponding to a region of a window (20) of a passing vehicle (18).

7. Distributed antenna system (2) according to one of the preceding claims, wherein the at least first and second radiating cables (10, 12) are arranged on a ceiling (30) inside an elongated building structure.

8. Distributed antenna system (2) according to one of the claims 1 to 5, wherein the first radiating cable (10) is arranged at a first side wall (32) inside an elongated building structure, in particular on a height above a floor (36) corresponding to a region of a window (20) of a passing vehicle (18), and the second radiating cable (12) is arranged at a second side wall (34) opposite to the first side wall (32), in particular on the height above the floor (36) corresponding to the region of the window (20) of a passing vehicle (18).

9. Distributed antenna system (2) according to one of the foregoing claims, wherein at least one of said radiating cables (10) comprises an electrically conductive shield comprising first slots (38), and wherein a longitudinal axis of each of the first slots (38) is aligned substantially perpendicular to a longitudinal axis of said at least one radiating cable (10).

10. Distributed antenna system (2) according to one of the foregoing claims, wherein at least one of said radiating cables (12) comprises second slots (42), and wherein a longitudinal axis of each of the second slots (42) is aligned substantially transversely to a longitudinal axis of said radiating cable (12).

11. Distributed antenna system (2) according to one of the foregoing claims, wherein the at least first and second radiating cables (10, 12) are arranged inside a tunnel (16), preferably a railway or road tunnel.

12. Communication system (3) comprising at least one distributed antenna system (2) according to one of the foregoing claims, wherein the communication system (3) further comprises a host unit (4) and at least two radio frequency, RF, transceiver units (6, 8), wherein each of the first or second radiating cables (10, 12) is connected to a respective transceiver unit (6, 8), and wherein the host unit (4) coordinates the transmission and/or reception of RF signals by the at least first and second radiating cables (10, 12).

13. Communication system (3) according to claim 12,
wherein the host unit (4) of the distributed antenna system (2) is configured to transmit and/or receive RF signals according to a multiple-input-multiple-output, MIMO, transmission scheme.

14. Communication system (3) according to claim 12 or 13, wherein the host unit (4) is connected to a backhaul network (14), and wherein the host unit (4) is configured to receive downlink data from the backhaul network (14) and to transmit corresponding RF downlink signals by means of the at least two radiating cables (10, 12), and wherein the host unit (4) is configured to receive RF uplink signals by means of the at least two radiating cables (10, 12) to transmit the corresponding uplink data to the backhaul network (14).
